# EUROPÄISCHE PATENTANMELDUNG

(11) **EP 3 621 182 A1**
(43) Veröffentlichungstag der Anmeldung: **11.03.2020**
(21) Anmeldenummer: 18192909.2
(22) Anmeldetag: 06.09.2018
(51) Int. Cl.: H02K 3/34, H02K 3/32, H02K 15/06

(54) **ZAHNSPULE UND VERFAHREN ZUR HERSTELLUNG EINER ZAHNSPULE**

(71) Anmelder: Siemens Aktiengesellschaft, 80333 München (DE)
(72) Erfinder: Bodensiek, Kevin, 90482 Nürnberg (DE); Brenner, Robin, 94036 Passau (DE); Schäfer, Klaus, 90455 Nürnberg (DE); Schönbauer, Norbert, 94072 Bad Füssing (DE); Weger, Michael, 94149 Kößlarn (DE)

(57) **Zusammenfassung**

Die Erfindung betrifft eine Zahnspule (6) eines Stators (3) oder Statorsegments (25) einer dynamoelektrischen Maschine mit
- zwei voneinander beabstandeten im Wesentlichen parallel verlaufenden geraden Abschnitten (14) und zwei an deren Enden befindlichen 180°-Bögen (15), wobei die geraden Abschnitte (14) einen Aktivteilbereich (13) aufweisen, dessen axiale Ausdehnung kleiner oder gleich der des geraden Abschnitts (14) ist,
- wobei die Zahnspule (6) eine in Längsrichtung verlaufende symmetrische Erstreckungsebene (16) aufweist,
- wobei um die geraden Abschnitte (14) der Zahnspule (6) ein Isolationsmaterial (9) vorgesehen ist, dass im Stator (3) oder Statorsegment (25) eine Nut- und/oder Phasenisolation bewirkt.

## Beschreibung

Die Erfindung betrifft eine Zahnspule, als auch das Verfahren zur Herstellung einer Zahnspule, ebenso einen Stator oder ein Statorsegment mit einer erfindungsgemäßen Zahnspule, als auch einen Windkraftgenerator, der erfindungsgemäße Zahnspulen aufweist.

Bei dynamoelektrischen Maschinen seien es Motoren oder Generatoren mit Zahnspulenwicklungen ist eine Ausführungsform, dass zwei Spulenseiten unterschiedlicher Spulen und/oder unterschiedlicher elektrischer Phasen in einer Nut liegen. Diese müssen dann z.B. durch eine geeignete Phasenisolation gegeneinander isoliert werden. Gleichzeitig müssen diese Spulenseiten auch gegen die Masse, also die Nutwand, isoliert werden. Diese zusätzlichen Isolationsmittel wirken sich negativ auf den Füllfaktor des Leitermaterials in der Nut aus. Dadurch sinkt die Performance des Generators oder des Motors.

Aus der EP 1 947 755 B1 ist ein Stator einer elektrischen Maschine bekannt, der Trennkörper in den Nuten vorsieht.

Nachteilig dabei ist, dass der Nutfüllfaktor vergleichsweise gering ist.

Ausgehend davon liegt der Erfindung die Aufgabe zugrunde, eine Zahnspule bzw. einen Stator oder ein Statorsegment einer dynamoelektrischen Maschine, insbesondere eines Windkraftgenerators zu schaffen, die einen vergleichsweise hohen Füllfaktor der Nut bei Optimierung des Isolationsmaterials gestattet. Außerdem sollen die axialen Wickelkopfausladungen der Zahnspule reduziert werden. Des Weiteren soll das Herstellverfahren einer Zahnspule bzw. eines Stators oder eines Statorsegments einer dynamoelektrischen Maschine, insbesondere eines Windkraftgenerators vergleichsweise einfach sein. Die Lösung der gestellten Aufgabe gelingt durch eine Zahnspule eines Stators oder Statorsegments einer dynamoelektrischen Maschine mit
- zwei voneinander beabstandeten im Wesentlichen parallel verlaufenden geraden Abschnitten und zwei an deren Enden befindlichen, insbesondere 180°-Bögen, wobei die geraden Abschnitte einen Aktivteilbereich aufweisen, dessen axiale Ausdehnung kleiner oder gleich der des geraden Abschnitts ist,
- wobei die Zahnspule eine in Längsrichtung verlaufende symmetrische Erstreckungsebene aufweist,
- wobei um die geraden Abschnitte der Zahnspule ein Isolationsmaterial vorgesehen ist, das im Stator oder Statorsegment eine Nut- und/oder Phasenisolation bewirkt.

Die Lösung gelingt ebenso durch einen Stator oder Statorsegment einer dynamoelektrischen Maschine, die einen magnetisch leitfähigen Grundkörper aufweisen, in dem im Wesentlichen axial verlaufende, zumindest teilgeöffnete Nuten vorgesehen sind, die mit erfindungsgemäßen Zahnspulen versehen sind, wobei pro Nut des Stators oder Statorsegments eine oder zwei Spulenseiten angeordnet sind.

Die Lösung der gestellten Aufgabe gelingt ebenso durch einen Windkraftgenerator mit einem erfindungsgemäßen Stator oder einem Statorsegment wobei der Stator oder das Statorsegment Teil eines Außenläufer- oder Innenläufergenerators ist.

Die Lösung der gestellten Aufgabe gelingt ebenso durch eine Windkraftanlage mit zumindest einem erfindungsgemäßen Windkraftgenerator.

Die Lösung der gestellten Aufgabe gelingt ebenso durch ein Verfahren zur Herstellung einer erfindungsgemäßen Zahnspule durch folgende Schritte:
- Wickeln von Leitermaterial auf einen Hilfskörper,
- Abnehmen der vorgefertigten Zahnspule vom Hilfskörper und Bewickeln der Zahnspule, zumindest auf deren Aktivteilbereichen mit einem Isolationsmaterial.

Die Lösung der gestellten Aufgabe gelingt ebenso durch ein Verfahren zur Herstellung eines erfindungsgemäßen Stators oder Statorsegments durch folgende Schritte:
- Bereitstellen eines magnetisch leitfähigen Grundkörpers, insbesondere eines Blechpakets mit einer Abfolge von Nuten und Zähnen, wobei in die Nuten Zahnspulen positioniert werden, so dass pro Nut eine Spulenseite oder zwei Spulenseiten unterschiedlicher Zahnspulen vorhanden sind.

Erfindungsgemäß wird nunmehr eine Zahnspule mit einer kombinierten Nut- und Phasenisolation versehen. Damit wird nunmehr eine vorgefertigte Zahnspule vor einem Positionieren in einer Nut des magnetisch leitfähigen Grundkörpers, also beispielsweise einem Blechpaket, mit Isolationsmaterial versehen. Die Isolation ist sowohl eine Isolation gegen die Nutwand als auch - sofern vorhanden - gegen eine benachbarte Spulenseite einer anderen Zahnspule in dieser Nut ausgeführt.

Das Isolationsmaterial ist dabei vorzugsweise ein Laminat zusammengesetzt aus PET-Vlies, PET-Film und Glimmer. Um eine höhere Isolierstoffklasse zu erreichen, können dabei auch andere Isolationsmaterialien eingesetzt werden. Diese sind beispielsweise die oben aufgeführten Materialen, bei denen dabei die PET-Anteile durch PI oder PEEK ersetzt werden.

Die dabei verwendeten Abkürzungen sind:
PET (Polyethylenterephthalat) ist ein durch Polykondensation produzierter, thermoplastischer Kunststoff aus der Familie der Polyester.

PI (Polyimide) sind Kunststoffe, mit dem Strukturmerkmal einer Imidgruppe.

PEEK (Polyetheretherketon) ist ein hochtemperaturbeständiger thermoplastischer Kunststoff und gehört zur Stoffgruppe der Polyaryletherketone. Seine Schmelztemperatur beträgt 335°C und ist somit auf für Isolationsanforderung bei höheren Temperaturen geeignet.

Als Glimmer wird vorzugsweise kalandierter Muskovite Glimmer eingesetzt.

Vorzugsweise entspricht die Schichtdicke der Phasenisolation dem ca. zweifachen der Schichtdicke der Nutisolation zur Nutwand. Diese Schichtdicken hängen auch von der Spannungsbelastung der dynamoelektrischen Maschine ab.

Die Zahnspule wird nunmehr beim Bestücken des Stators oder des Statorsegments lediglich von der (späteren) Luftspaltseite der dynamoelektrischen Maschine ca. mittig über dem Zahn des Blechpakets positioniert. Dabei ist je nach Ausführung des Stators oder des Statorsegments ein Aufweiten der Zahnspule durch ein Spezialwerkzeug notwendig, damit sich die Schenkel bzw. die geraden Abschnitte der Zahnspule in den Nuten positionieren lassen. Das Aufweiten oder Ziehen oder Stauchen der Zahnspule, muss das Isolationsmaterial selbstverständlich "mitmachen".

Vorteilhafterweise wird nunmehr der Füllfaktor der Nut höher, es werden ebenso die Isolationsteile einer Zahnspule in der Nut auf das notwendige Maß reduziert, ebenso wird eine nachhaltige Positionierung der Nutisolation an der Zahnspule erreicht. Eine zusätzliche Fixierung der Zahnspule in der Nut - falls erforderlich - wird durch ein Nutverschlusselement geschaffen.

Des Weiteren ist dadurch die axiale Ausladung des Wickelkopfes des Wicklungssystems des Stators vergleichsweise kurz, was den Einsatz einer erfindungsgemäßen Zahnspule in einem Stator oder einem Statorsegment einer dynamoelektrischen Maschine, insbesondere eines Windkraftgenerators bei begrenzten Platzverhältnissen besonders attraktiv macht.

Die Erfindung sowie weitere vorteilhafte Ausgestaltungen der Erfindung werden anhand beispielhaft dargestellter Ausführungsbeispiele näher erläutert; darin zeigen:
- FIG 1: eine Ansicht einer Zahnspule,
- FIG 2: eine Teilansicht einer Zahnspule,
- FIG 3: eine perspektivische Darstellung einer vorgefertigten Zahnspule,
- FIG 4: einen Teilausschnitt einer Zahnspule,
- FIG 5: eine Teilansicht einer Anordnung von Zahnspulen in einem Blechpaket,
- FIG 6: eine Seitenansicht eines Statorsegments,
- FIG 7: Anordnung eines Generators in einer Windkraftanlage.

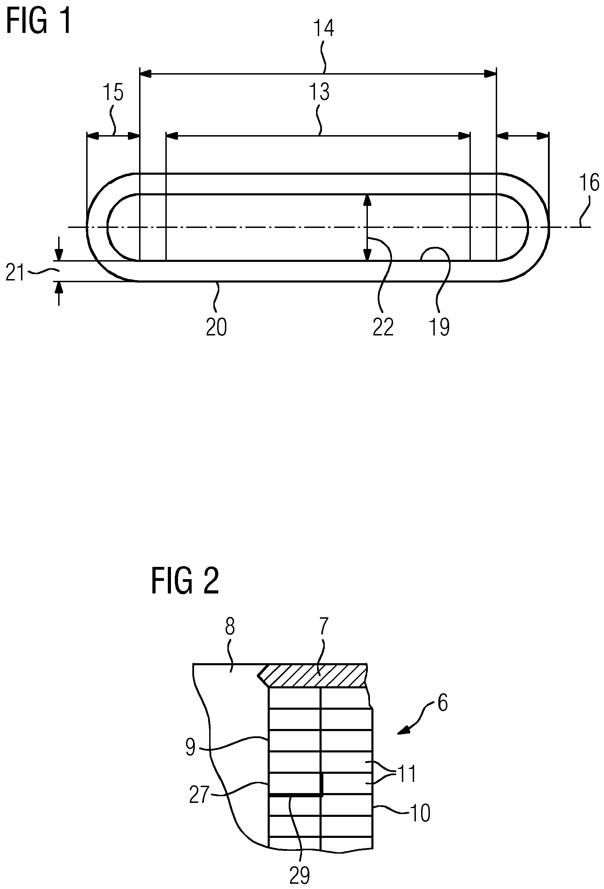

FIG 1 zeigt eine Zahnspule 6 ohne Isolierung 9, mit ihren geraden Abschnitten 14 und den, insbesondere 180°-Bögen, den Bogenbereichen 15. Die Zahnspule 6 ist symmetrisch zu einer Erstreckungsebene 16, die senkrecht zur Zeichenebene steht. Die geraden Abschnitte 14 weisen einen Aktivteilbereich 13 auf, der in diesem Fall kleiner als der gerade Abschnitt 14 ist.

Der Aktivteilbereich 13 ist der Mindestbereich der Zahnspule 6, der in einem Blechpaket eines Stators 3 oder Statorsegments 25 angeordnet ist. Der gerade Abschnitt 14 ist der Bereich, der gegebenenfalls zusätzlich noch mit einer Isolierung 9 zu versehen ist, um u.a. die Kriechweganforderungen der Zahnspule 6 im Stator 3 einzuhalten.

Die geraden Abschnitte 14 der Zahnspule 6 weisen einen Abstand 22 ihrer Innenseiten 19 auf, der im Idealfall einer Zahnbreite eines Stators 3 oder Statorsegments 25 entspricht. Die Leiterdicke 21 der Zahnspule 6 nimmt zumindest einen Teil der Breite einer Nut 17 des Stators 3 oder des Statorsegments 25 ein. An der Innenseite 19 der Zahnspule 6 dient die Isolierung der Potentialtrennung zur Nutwand 27.

Isolierungen 9 an den Außenseiten 20 der geraden Abschnitte 14 der Zahnspule 6 dienen der Phasenisolierung zu einer benachbarten Spulenseite einer benachbarten Zahnspule 6 in der Nut 17 und ragen axial bis in den Bereich der Wickelköpfe 18, die durch die Bogenbereiche 15 gebildet werden.

FIG 2 zeigt in einer Seitendarstellung eine prinzipielle Anordnung einer Zahnspule 6, wobei die einzelnen Teilleiter 11 als zweilagiger Flachdraht 10 ausgebildet und zu den benachbarten Teilleitern 11 eine Teilleiterisolierung 29 aufweisen. Diese Teilleiterisolierung 29 erstreckt sich über die Gesamtlänge der Zahnspule 6, also die Länge der Bogenbereiche 15 plus den geraden Abschnitten 14 der Zahnspule 6. In Umfangsrichtung betrachtet erstreckt sich diese Teilleiterisolierung 29 eines Teilleiters 11 über zumindest zwei Seiten, eine Längs- und eine Querseite, wie sie prinzipiell an einem Teilleiter 11 aus zeichnerischen Gründen überdimensioniert dargestellt ist. Die Nut 17 selber ist durch einen Nutverschlusselement 7 zu einem Luftspalt 23 einer dynamoelektrischen Maschine abgeschlossen.

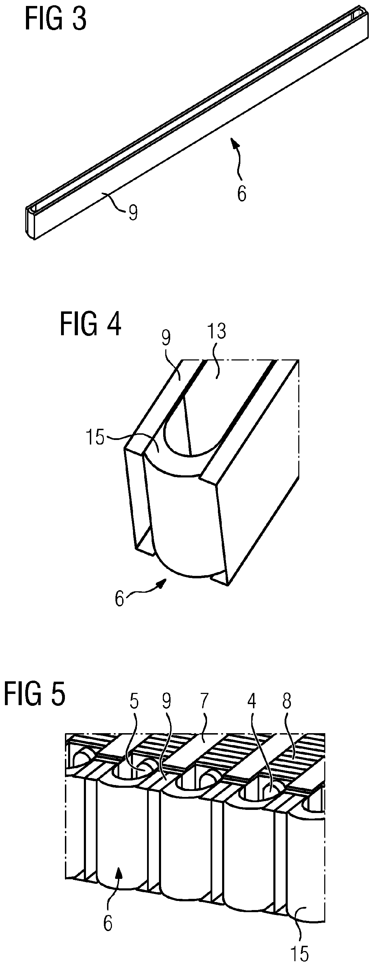

FIG 3 zeigt eine vorgefertigte Zahnspule 6 mit ihren Isolierungen 9, die auch Glimmer enthalten können, um u.a. Teilentladungen zu vermeiden. Dabei handelt es sich vorzugsweise um kalandierten Muskovite Glimmer imprägniert mit einem voll ausgehärteten Imprägnierharz.

FIG 4 zeigt die Anordnung im Bereich des Wickelkopfes 18, wobei die Außenseiten 20 der Zahnspule 6 mit Isoliermaterial versehen, das in Bezug auf die Innenseiten 19 axial länger in Richtung Wickelkopf 18 ausgeführt ist. Dies ist u.a. der Tatsache geschuldet, dass die Bogenbereiche 15 sich daran anschließt. Des Weiteren wird in diesem Bereich dadurch eine verbesserte Kriechstromfestigkeit erreicht.

FIG 5 zeigt nunmehr eine Anordnung von isolierten, vorgefertigten Zahnspule 6 in den Nuten 17 eines Stators 3 bzw. Statorsegments 25. Dabei wird der Stator 3 oder das Statorsegment 25 durch Druckplatten 4 und/oder Finger 5 einer Druckplatte 4 axial paketiert. In Nuten 17 dieses Blechpakets des Stators 3 oder des Statorsegments 25 werden vorgefertigte Zahnspulen 6 angeordnet. In dieser Ausführung sind pro Nut 17 gerade Abschnitte 14 bzw. Aktivteilbereiche 13 unterschiedlicher Zahnspulen 6 angeordnet.

Der Bereich des Wickelkopfes 18 des Stators 3 oder Statorsegments 25 setzt sich nunmehr aus 180°-Bögen also den Bogenbereichen 15 der unterschiedlichsten Zahnspulen 6 zusammen. Die Isolierung 9 an den Außenseiten 20 der Zahnspulen 6 erstreckt sich axial zumindest bis an den Bogenbereich 15 oder darüber hinaus. Damit erstreckt sich die Isolierung 9 an den Außenseiten 20 der Zahnspulen 6 bis an oder nahezu auf oder die axiale Höhe der axialen Ausladung der Wickelköpfe 18.

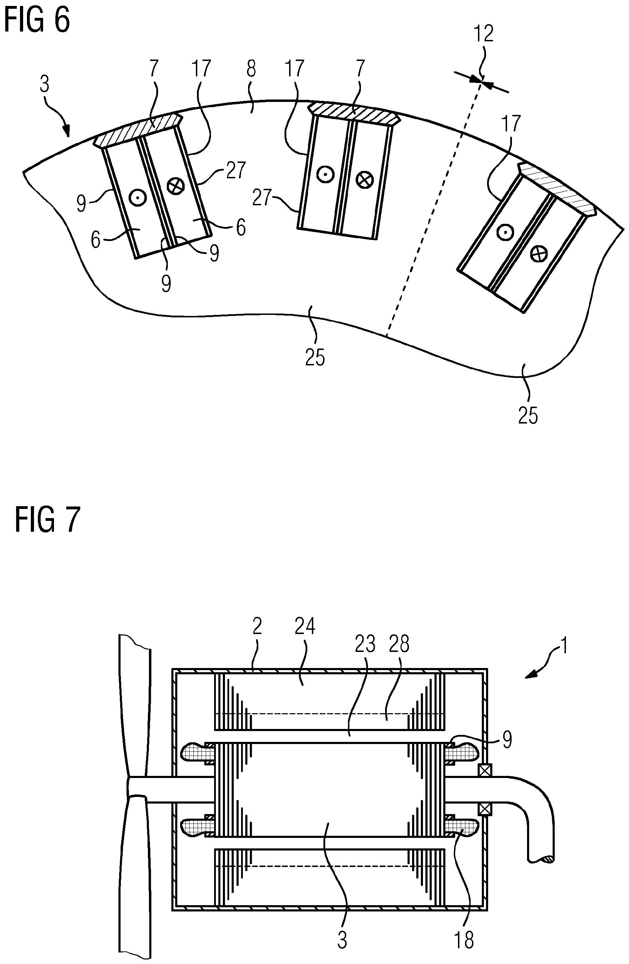

FIG 6 zeigt eine Seitenteilansicht eines Statorsegments 25 mit einer optionalen Segmentgrenze 12 des Statorsegments 25, wobei in den Nuten 17 jeweils zwei Spulenseiten unterschiedlicher Zahnspulen 6, gegebenenfalls auch unterschiedlicher elektrischer Phasen angeordnet sind. Demzufolge ist dort eine Isolierung 9 zwischen den Außenseiten 20 der Zahnspulen 6 als auch zwischen den Zahnspulen 6 und den Zähnen 8 des Statorsegments 25 vorzusehen. In dem Bereich des Zahnes 8, der einem Luftspalt 23 zugewandt ist, befinden sich Nutverschlusselemente 7.

Im Querschnitt betrachtet weist eine Zahnspule 6 zumindest ansatzweise V-förmig angeordnete Spulenseiten auf. Die einander zugeneigten Spulenseiten sind ggf. erforderlich um einem vor allem vergleichsweise geringen Krümmungsradius von Stator 3 oder Statorsegment 25 zu folgen, der einem Luftspalt 23 und damit einem Rotor 24 zugewandt ist.

FIG 7 zeigt eine prinzipielle Darstellung eines Außenläufergenerators 2, dessen Rotor 24 durch ein Windrad direkt angetrieben ist, wobei durch elektromagnetische Wechselwirkung zwischen dem Rotor 24, der mit Permanentmagneten 28 versehen ist und einem erfindungsgemäß aufgebauten Stator 3 oder Statorsegmenten 25 durch elektromagnetische Wechselwirkung elektrische Energie erzeugt wird. Der Rotor 24 rotiert dabei mit seinem Gehäuse, das an einer Welle des Windrades befestigt ist um den stationären Stator 3.

## Patentansprüche

1. Zahnspule (6) eines Stators (3) oder Statorsegments (25) einer dynamoelektrischen Maschine mit
- zwei voneinander beabstandeten im Wesentlichen parallel verlaufenden geraden Abschnitten (14) und zwei an deren Enden befindlichen, insbesondere 180°-Bögen (15), wobei die geraden Abschnitte (14) einen Aktivteilbereich (13) aufweisen, dessen axiale Ausdehnung kleiner oder gleich der des geraden Abschnitts (14) ist,
- wobei die Zahnspule (6) eine in Längsrichtung verlaufende symmetrische Erstreckungsebene (16) aufweist,
- wobei um die geraden Abschnitte (14) der Zahnspule (6) ein Isolationsmaterial (9) vorgesehen ist, dass im Stator (3) oder Statorsegment (25) eine Nut- und/oder Phasenisolation bewirkt.

2. Zahnspule (6) nach Anspruch 1, **dadurch gekennzeichnet, dass** die Zahnspule (6) aus Flachdraht (10) gewickelt ist.

3. Zahnspule (6) nach Anspruch 2, **dadurch gekennzeichnet, dass** der Flachdraht (10) bezüglich der Erstreckungsebene (16) hochkant angeordnet ist, derart, dass, im Querschnitt betrachtet, die Längsausdehnung des Flachdrahtes (10) senkrecht zur Erstreckungsebene (16) ist.

4. Zahnspule (6) nach einem der vorhergehenden Ansprüche, **dadurch gekennzeichnet, dass** die Isolierung (9) der Zahnspule (6) zumindest an den Aktivteilbereichen (13) vorhanden ist.

5. Zahnspule (6) nach einem der vorhergehenden Ansprüche, **dadurch gekennzeichnet, dass** jeder Flachdraht (10) eine Teilleiterisolation (29) aufweist, die in Umfangsrichtung betrachtet zumindest eine Längsseite des Flachdrahtes (10) bedeckt.

6. Zahnspule (6) nach einem der vorhergehenden Ansprüche,
**dadurch gekennzeichnet, dass** die als Nut- und/oder Phasenisolation ausgeführte Isolation der Aktivteilbereiche (13) teilentladungsbeständig ist, indem der Isolierung Glimmer beigefügt ist.

7. Stator (3) oder Statorsegment (25) einer dynamoelektrischen Maschine, die einen magnetisch leitfähigen Grundkörper (26) aufweisen, in dem im Wesentlichen axial verlaufende, zumindest teilgeöffnete Nuten (17) vorgesehen sind, die mit Zahnspulen (6) nach einem der vorhergehenden Ansprüche versehen sind, wobei pro Nut (17) des Stators (3) oder Statorsegments (25) eine oder zwei Spulenseiten angeordnet sind.

8. Stator (3) oder Statorsegment (25) nach Anspruch 7, **dadurch gekennzeichnet, dass** jede Öffnung einer Nut (17) ein Nutverschlusselement (7) aufweist.

9. Stator (3) oder Statorsegment (25) nach einem der vorhergehenden Ansprüche, **dadurch gekennzeichnet, dass** die Nut- und/oder Phasenisolation ein selbstklebendes Isolationsmaterial, insbesondere Papier aufweist.

10. Windkraftgenerator (2) mit einem Stator (3) oder mehreren Statorsegmenten (25) nach einem der vorhergehenden Ansprüche 7 bis 9, wobei der Stator (3) oder das Statorsegment (25) Teil eines Außenläufer- oder Innenläufergenerators ist.

11. Windkraftanlage (1) mit zumindest einem Windkraftgenerator (2) nach Anspruch 10.

12. Verfahren zur Herstellung einer Zahnspule (6) durch folgende Schritte:
- Wickeln von Leitermaterial auf einen Hilfskörper,
- Abnehmen der vorgefertigten Zahnspule (6) vom Hilfskörper und Bewickeln der Zahnspule (6), zumindest auf deren Aktivteilbereichen (13) mit einem Isolationsmaterial (9).

13. Verfahren zur Herstellung einer Zahnspule (6) nach Anspruch 12, **dadurch gekennzeichnet, dass** das Leitermaterial der Zahnspule (6) ein mit Teilleiterisolation (29) versehener Flachdraht (10) ist und ein- oder zweilagig angeordnet ist.

14. Verfahren zur Herstellung eines Stators (3) oder Statorsegments (25) durch folgende Schritte:
- Bereitstellen eines magnetisch leitfähigen Grundkörpers (26), insbesondere eines Blechpakets mit einer Abfolge von Nuten (17) und Zähnen (8), wobei in die Nuten (17) Zahnspulen (6) positioniert werden, so dass pro Nut (17) eine Spulenseite oder zwei Spulenseiten unterschiedlicher Zahnspulen (6) vorhanden sind.

15. Verfahren zur Herstellung eines Stators (3) oder Statorsegments (25) nach Anspruch 14, **dadurch ge kennzeichnet**, dass die Nuten (17) an ihren jeweiligen Öffnungen zu einem Luftspalt (23) mit einem Nutverschlusselement (7) versehen werden.
